# FASCICULE DE BREVET EUROPEEN

(11) **EP 0 974 418 B1**
(45) Date de publication et mention de la délivrance du brevet: **14.11.2007**
(21) Numéro de dépôt: 99401749.9
(22) Date de dépôt: 12.07.1999
(51) Int. Cl.: B23K 35/02, C23C 24/04, B22F 1/02

(54) **Procédé de brasage diffusion de pièces en superalliage**
Verfahren zum Diffusionshartlöten von Gegenständen aus Superlegierungen
Process for diffusion-brazing of superalloy workpieces

(30) Priorité: 23.07.1998 FR 9809396
(43) Date de publication de la demande: 26.01.2000
(73) Titulaire: SNECMA SERVICES, 75015 Paris (FR)
(72) Inventeur: Malie, André Hubert Louis, 86100 Targe (FR); Grosbras, Michel, 86300 Bonnes (FR); Beaufort, Marie-France, 86280 Saint Benoit (FR); Jacquot, Frédéric, 79000 Niort (FR); Huchin, Jean-Pierre, 86100 Chatellerault (FR)
(74) Mandataire: Nguyen, Dominique

(56) Documents cités:
- EP-A- 0 559 229
- WO-A-93/04807
- FR-A- 2 296 491
- FR-A- 2 511 908
- US-A- 4 713 217

## Description

La présente invention concerne un procédé de brasage-diffusion de pièces en superalliage à base de nickel, cobalt ou fer, de structure polycristalline ou monocristalline. Ledit procédé est particulièrement appliqué à l'assemblage ou à la réparation par rechargement de pièces, notamment dans le domaine aéronautique.

Les conditions sévères de fonctionnement imposées par exemple aux aubes de turbomachines et de turbines industrielles exigeant notamment une excellente résistance à chaud à l'oxydation et/ou une excellente tenue en corrosion combinées à de bonnes propriétés mécaniques à hautes températures telle qu'une bonne tenue en fluage ont amené l'utilisation pour leur fabrication de superalliages à base de nickel, cobalt ou fer. Pour la réalisation d'assemblages ou de réparations par rechargement, les techniques courantes de soudage avec fusion se révèlent mal adaptées à ces matériaux ou demanderaient des mises en oeuvre complexes et souvent irréalisables.

Des procédés de brasage-diffusion ont alors été utilisés. En évitant de modifier profondément la structure métallurgique du matériau, ces procédés visent à obtenir des liaisons homogènes du point de vue chimique et aussi structural. Une illustration en est donnée par exemple par EP-A- 0 075 497 et par FR-A-2 511 908.

Il est connu pour réaliser des réparations par rechargement d'utiliser des poudres de brasage dites bicomposant et constituées d'un mélange de deux poudres obtenues notamment par atomisation sous argon :
- une poudre de superalliage de composition chimique voisine de celle du matériau à réparer ;
- une poudre à base de nickel ou de cobalt contenant 2 à 6% en masse d'éléments fondants tels que le bore ou le silicium.

L'opération de brasage-diffusion est réalisée à une température comprise entre 1050°C et 1220°C, déterminée inférieure à la température de fusion du superalliage. A la température de l'opération, la poudre de superalliage reste à l'état solide et la poudre contenant les éléments fondants devient liquide assurant à la fois la fluidité du mélange, le brasage des grains de poudre de superalliage entre eux amenant une densification et par diffusion des éléments fondants, une solidification isotherme du joint liquide est obtenue à la température de brasage. L'interdiffusion entre le joint brasé et le superalliage du métal de base assure l'homogénéisation des compositions chimiques. Après les traitements thermiques classiques, les zones rechargées par brasage-diffusion présentent les propriétés mécaniques à hautes températures recherchées, très proches de celles du matériau de base des pièces. En outre, les revêtements connus améliorant la tenue à la corrosion et à l'oxydation à haute température peuvent être appliqués.

Les procédés connus de brasage-diffusion utilisant des poudres bicomposant entrainent cependant certaines contraintes et des inconvénients de mise en oeuvre :
- l'opération de mélange des deux poudres est longue et fastidieuse,
- l'homogénéisation de la composition chimique du mélange est délicate et nécessite de nombreux contrôles mais reste impérative,
- des conditions particulières de stockage doivent être prévues pour éviter toute ségrégation du mélange,
- le ratio des proportions des deux poudres dans le mélange doit en outre être adapté en fonction de la nature du rechargement et, en particulier, de la largeur des fissures à réparer.

Un procédé de brasage-diffusion de pièces en superalliage A répondant aux conditions précitées en évitant les inconvénients des procédés connus antérieurs comporte les étapes suivantes :
- (a) préparation d'une quantité déterminée de poudre de superalliage A de composition identique à celle des pièces et d'une quantité correspondante en proportion massique comprise entre 0,1% et 40% de poudre d'au moins un élément fondant pris dans le groupe bore et silicium ;
- (b) introduction sous forme mélangée des poudres préparées à l'étape a avec des billes dans un conteneur, billes et conteneur étant en superalliage A, puis après fermeture du conteneur, maintien sous atmosphère contrôlée ;
- (c) mise du conteneur dans un broyeur et maintien en mouvement du conteneur pendant une durée allant de 30 secondes à 500 heures de manière à incorporer l'élément fondant à la surface des grains de la poudre de superalliage
- (d) nettoyage par voie chimique au bain des surfaces de pièces à braser ;
- (e) traitement au four par voie thermochimique desdites pièces ;
- (f) dépôt sur lesdites surfaces de pièces d'un apport constitué de la poudre dite à monocomposant obtenue à l'étape (c) ;
- (g) réalisation d'un cycle thermique de brasage au four comportant une montée par paliers jusqu'à une température de brasage comprise entre 1050°C et 1400°C et déterminée en fonction du superalliage puis un temps de maintien allant de 15 à 30 minutes ;
- (h) traitement thermique de diffusion au four sous atmosphère contrôlée pendant une durée comprise entre 4 et 16 heures.

D'autres caractéristiques et avantages de l'invention seront mieux compris à l'aide de la description qui va suivre d'exemples de réalisation du procédé de brasage-diffusion selon l'invention, en référence aux dessins annexés sur lesquels :
- les figures 1, 2 et 3 sont des vues partielles schématiques montrant les divers états physico-chimiques de la couche de liaison lors de l'assemblage de deux pièces en superalliage grâce au procédé de brasage-diffusion conforme à l'invention;
- les figures 4, 5 et 6 sont des vues partielles schématiques montrant de manière analogue aux figures 1, 2 et 3 les divers états physico-chimiques de l'apport de rechargement lors de la réparation d'une pièce en superalliage grâce au procédé de brasage-diffusion conforme à l'invention.

Le procédé de brasage-diffusion conforme à l'invention est appliqué lors de la fabrication ou pour la réparation de pièces en superalliage à base de nickel, de cobalt ou de fer. Ledit procédé permet notamment de réaliser un assemblage de pièces ou un rebouchage de fissure sur pièce ou un rechargement de surface de pièce assurant la restauration dimensionnelle de la pièce.

De manière remarquable et conforme à l'invention, une poudre de brasage dite à monocomposant est utilisée dans le procédé de brasage-diffusion. La poudre monocomposant est obtenue suivant la gamme opératoire de fabrication comportant les étapes suivantes :
- on effectue la mesure par simple pesée de la proportion pondérale choisie de la(es) poudre(s) d'élément(s) fondant bore et/ou silicium dans la poudre de superalliage à base de nickel, de cobalt ou de fer. La proportion d'élément(s) fondant dans la poudre de superalliage balaye le domaine suivant de 0,1% à 40% en masse ;
- on réalise ensuite le mélange des poudres de superalliage base nickel, cobalt ou de fer et d'élément(s) fondant bore et/ou silicium pendant quelques minutes ;
- on dépose ensuite le mélange des poudres de superalliage et d'éléments fondant avec des billes en superalliage base nickel, cobalt ou fer dans un conteneur en superalliage base nickel, cobalt ou fer. Ce conteneur est refermé par un couvercle possédant un joint en Téflon. Le conteneur est alors mis sous vide ou sous atmosphère neutre afin de limiter les contaminations en oxygène ;
- le conteneur est ensuite placé dans un broyeur qui est alors mis en route pendant un temps de broyage allant de 30 secondes à 500 heures ;
- une fois le broyage terminé, le conteneur est alors ouvert soit sous air, soit sous atmosphère inerte pour limiter la contamination en oxygène ;
- on récupère ensuite la poudre de brasage "monocomposant" que l'on stocke dans des conteneurs sous atmosphère inerte afin de limiter la contamination en oxygène.

De cette manière, pendant la durée du brasage, le mouvement des billes dans le conteneur provoque des chocs entre les billes et les grains de poudre et contre les parois. Ces chocs permettent d'incruster les éléments fondants sur la surface des grains en superalliage. Le broyeur qui met en mouvement le conteneur est de tout type connu, vibratoire, planétaire ou horizontal.

Ce mode avantageux de fabrication de la poudre monocomposant permet d'éliminer des opérations longues de mélange de poudres. Seulement un mélange de quelques minutes permet de répartir de manière homogène la poudre d'élément(s) fondant(s) parmi les grains de poudre de superalliage avant d'effectuer la mécanosynthèse au broyeur.

L'incrustation obtenue des éléments fondants en surface des grains de poudre de superalliage permet d'assurer une composition chimique homogène qui est une condition importante pour obtenir des résultats satisfaisants lors de l'utilisation de la poudre de brasage. Les contrôles de composition chimique peuvent en conséquence être simplifiés.

Le mode de fabrication de la poudre monocomposant permet également d'obtenir des résultats satisfaisants lors de son utilisation tout en conservant une proportion plus importante de superalliage dans sa composition par rapport aux poudres connues antérieures dites à bicomposant. Par suite, les zones d'application sur pièces présentent de meilleures propriétés mécaniques, notamment dans le cas de pièces de turbomachine sollicitées en fluage à haute température.

La réalisation d'un assemblage ou d'une réparation de pièces en superalliage par brasage-diffusion nécessite une préparation de surface des pièces. Notamment pour des pièces de turbomachine en superalliage à base de nickel, de cobalt
ou de fer, fissurées ou endommagées après une exposition à des gaz de combustion à haute température et présentant une couche contaminée en surface, des nettoyages par voie chimique au bain sont effectués, comportant les opérations suivantes :
- décalaminage dans un bain acide ou alcalin suivi d'un rinçage ;
- conditionnement des oxydes dans un bain au permanganate alcalin ou dans un bain de soude fondue suivi d'un rinçage ;
- immersion dans un bain acide constitué d'une solution aqueuse d'acide chlorhydrique , d'acide nitrique, d'acide acétique, d'acide phosphorique et d'un sel ferrique, suivi d'un rinçage.

Après enlèvement de la couche contaminée recouvrant la pièce, la préparation est parachevée par un traitement par voie thermo-chimique dans des conditions connues en soi. Ledit traitement est effectué dans une enceinte semi-étanche où est placé un cément à base de fluorure d'ammonium et de chrome, ladite enceinte étant placée dans un four à atmosphère contrôlée d'hydrogène.

En fonction des applications particulières et suivant la taille et la configuration des défauts à réparer sur les pièces, une opération complémentaire de brasage peut être effectuée. Dans ce cas, on dépose à la surface des zones concernées un métal d'apport constitué en un alliage à base de nickel ou de cobalt et comportant un élément fondant tel que le bore puis un cycle thermique de brasage est effectué, avec montée en température de brasage pendant un temps de 15 minutes, de manière à obtenir la fusion du métal d'apport et le mouillage des surfaces.

Un apport constitué de la poudre à monocomposant obtenue suivant la gamme de fabrication précédemment décrite est alors effectué dans les zones concernées de pièce. Ensuite, un cycle thermique de brasage est réalisé au four comportant une montée par paliers jusqu'à une température de brasage comprise entre 1050°C et 1400°C et déterminée pour rester inférieure à la température de fusion du superalliage constituant à la fois la pièce et la poudre de brasage avant l'opération de mécanosynthèse, puis un temps de maintien allant de 15 à 30 minutes.

Enfin, un traitement thermique de diffusion est effectué au four sous atmosphère contrôlée, vide ou atmosphère inerte pendant une durée comprise entre 4 et 16 heures, de manière à assurer une homogénéisation suffisante de la zone brasée.

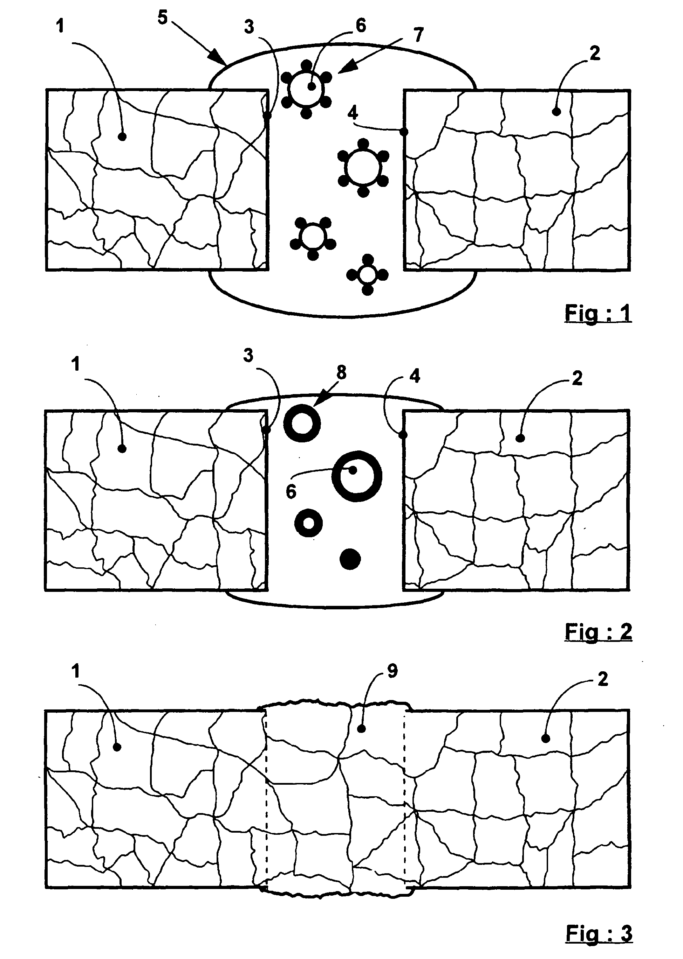

Les figures 1, 2 et 3 montrent suivant une représentation schématique un exemple d'application du procédé de brasage-diffusion conforme à l'invention et qui vient d'être décrit à l'assemblage de deux pièces 1 et 2. Suivant la figure 1, entre les surfaces 3 et 4 à assembler des pièces 1 et 2 est déposée la poudre de brasage à monocomposant 5 constituée de grains 6 de superalliage enrichis par les éléments fondants 7 incrustés en surface des grains.

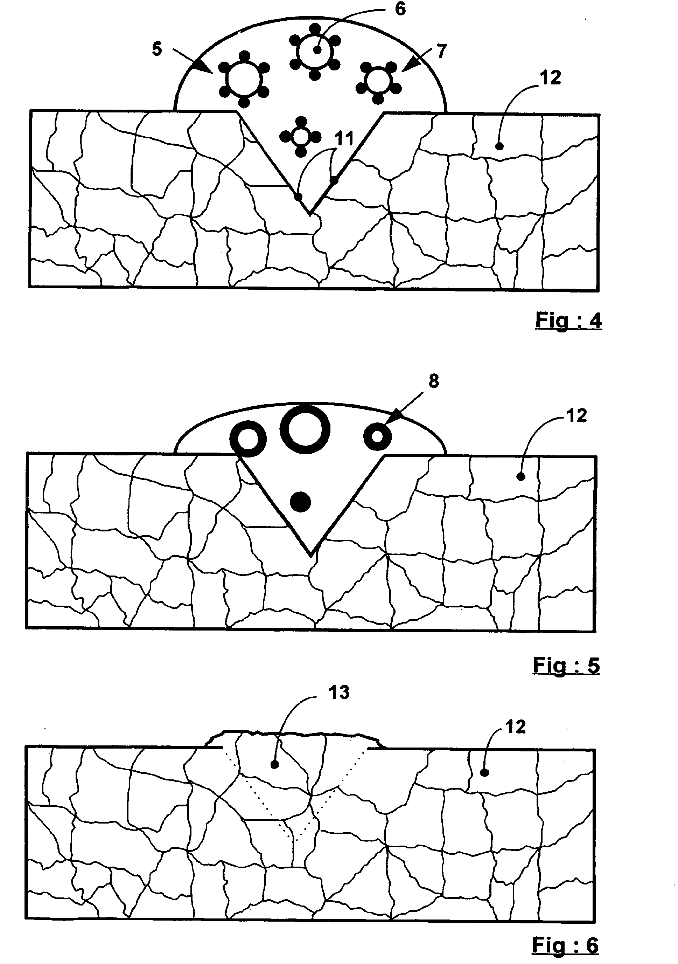

Suivant la figure 2, les éléments fondants 7 et une partie de la zone proche de la surface des grains 6 de superalliage passent à l'état liquide et la phase liquide 8 ainsi constituée mouille les surfaces 3 et 4 et les grains 6 de superalliage. Compte-tenu des faibles dimensions des grains, la phase liquide 8 est retenue par capillarité.

La figure 3 montre le résultat obtenu à l'issue du traitement de diffusion. Une couche intermédiaire 9 s'est solidifiée, présentant une structure métallographique homogène liée par diffusion aux pièces 1 et 2. Les surfaces 3 et 4, anciennes limites de parois des pièces 1 et 2, symbolisées par des pointillés sur la figure 3, ne constituent aucune rupture dans la structure.

Un exemple d'application du procédé de brasage-diffusion conforme à l'invention et précédemment décrit est illustré dans le cas de la réparation d'une pièce en superalliage par les figures 4 à 6. Comme précédemment, suivant la figure 4, la poudre de brasage à monocomposant 5 est déposée sur la zone à réparer 11 de la pièce 12. La poudre 5 est constituée de grains 6 de superalliage sur lesquels sont incrustés en surface les éléments fondants 7.

La figure 5 montre l'apparition de la phase liquide 8. La figure 6 montre après le traitement de diffusion la présence d'une couche solidifiée 13 dont la structure métallographique est homogène et liée par diffusion aux parois de la pièce 12.

En fonction des applications particulières du procédé de brasage-diffusion conforme à l'invention, soit à l'assemblage de pièces, soit à la réparation de pièces par rebouchage de fissures ou par rechargement assurant une restauration dimensionnelle, l'apport de la poudre de brasage à monocomposant peut être effectué sous différentes formes. Ainsi, la poudre de brasage peut être déposée avec un ajout de liant organique, connu en soi et déterminé pour disparaitre par pyrolyse au cours du traitement thermique sans laisser de résidu indésirable notamment carboné.

L'apport peut également être effectué par exemple sous la forme d'un élément compact préalablement préparé en mettant en oeuvre diverses techniques de fabrication. Ainsi, par exemple, la poudre de brasage à monocomposant peut être placée dans un moule de forme homothétique à la forme à obtenir et l'élément compact autobrasable est obtenu après un cycle thermique assurant une compaction par frittage.

## Revendications

1. Procédé de brasage-diffusion de pièces en superalliage A utilisant un matériau d'apport obtenu à partir d'une poudre de brasage et comportant les étapes suivantes :
- (a) préparation d'une quantité déterminée de poudre de superalliage A de composition identique à celle des pièces et d'une quantité correspondante en proportion massique comprise entre 0,1% et 40% de poudre constituée uniquement d'éléments fondants pris dans le groupe bore et ou silicium ;
- (b) introduction sous forme mélangée des poudres préparées à l'étape a avec des billes dans un conteneur, billes et conteneur étant en superalliage A, puis après fermeture du conteneur, maintien sous atmosphère contrôlée ;
- (c) mise du conteneur dans un broyeur et maintien en mouvement du conteneur pendant une durée allant de 30 secondes à 500 heures de manière à incruster l'élément fondant sur la surface des grains de la poudre de superalliage;
- (d) nettoyage par voie chimique au bain des surfaces de pièces à braser ;
- (e) traitement au four par voie thermochimique desdites pièces ;
- (f) dépôt sur lesdites surfaces de pièces d'un apport constitué de la poudre dite à monocomposant obtenue à l'étape (c), cette poudre étant constituée de grains de superalliage sur lesquels sont incrustés en surface les éléments fondants;
- (g) réalisation d'un cycle thermique de brasage au four comportant une montée par paliers jusqu'à une température de brasage comprise entre 1050°C et 1400°C et déterminée en fonction du superalliage puis un temps de maintien allant de 15 à 30 minutes ;
- (h) traitement thermique de diffusion au four sous atmosphère contrôlée pendant une durée comprise entre 4 et 16 heures.

2. Procédé de brasage-diffusion de pièces en superalliage selon la revendication 1 **caractérisé en ce que** après l'étape (e) une première opération de brasage est effectuée comportant les étapes :
- (f1) dépôt sur les surfaces à braser d'un métal d'apport sous forme d'une brasure classique à base de nickel ou cobalt et élément fondant ;
- f2) réalisation d'un cycle thermique de brasage au four avec montée à la température de brasage en 15 minutes, jusqu'à la fusion du métal d'apport et le mouillage des surfaces.

3. Procédé de brasage-diffusion de pièces en superalliage selon la revendication 1 **caractérisé en ce que** à l'étape (f) la poudre dite à monocomposant est déposée avec un ajout de liant organique.

4. Procédé de brasage-diffusion de pièces en superalliage selon la revendication 1 **caractérisé en ce que** à l'étape (f), l'apport est constitué par un élément compact obtenu après mise en place de la poudre monocomposant obtenue à l'étape (c) dans un moule de forme homothétique à la forme de l'élément compact à obtenir et réalisation d'un cycle thermique assurant une compaction par frittage de l'élément compact autobrasable.

5. Procédé de brasage-diffusion de pièces en superalliage selon la revendication 1 **caractérisé en ce que** à l'étape (f) l'apport est effectué à l'aplomb du jeu séparant les faces de liaison de deux pièces (1, 2) dont l'assemblage est réalisé à l'issue des étapes suivantes (g) et (h).

6. Procédé de brasage-diffusion de pièces en superalliage selon la revendication 1 **caractérisé en ce que** à l'étape (f) l'apport est effectué à l'aplomb d'une fissure de la pièce (12) à réparer, la réparation étant réalisée à l'issue des étapes suivantes (g) et (h).

7. Procédé de brasage-diffusion de pièce en superalliage selon la revendication 1 **caractérisé en ce que** à l'étape (f) l'apport est effectué sur une surface de pièce à recharger, le rechargement étant réalisé à l'issue des étapes suivantes (g) et (h) de manière à assurer la restauration dimensionnelle de la pièce.

## Claims

1. Process for the diffusion/brazing of parts made of superalloy A using a filler material obtained from a brazing powder, said process comprising the following steps:
- (a) a defined amount of superalloy A powder of identical composition to that of the parts and a corresponding amount by weight of between 0.1% and 40% of powder consisting only of fluxing elements, taken from the group boron and/or silicon, are prepared;
- (b) the powders prepared in step (a) are introduced in blended form, together with balls, into a jar, said balls and said jar being made of superalloy A, and then, after the jar is closed, it is maintained under a controlled atmosphere;
- (c) the jar is placed in a mill and kept in movement for a time ranging from 30 seconds to 500 hours so as to encrust the fluxing element into the surface of the superalloy powder particles;
- (d) the surfaces of the parts to be brazed are cleaned chemically in a bath;
- (e) said parts undergo a thermochemical furnace treatment;
- (f) a filler material, consisting of a so-called one-component powder obtained from step (c), this powder consisting of superalloy particles into the surface of which the fluxing elements have been encrusted, is deposited on said part surfaces;
- (g) a brazing thermal cycle is carried out in a furnace, comprising raising the temperature in stages up to a brazing temperature between 1050°C and 1400°C, this being determined depending on the superalloy, followed by a hold time ranging from 15 to 30 minutes; and
- (h) a diffusion heat treatment is carried out in the furnace in a controlled atmosphere for a time of between 4 and 16 hours.

2. Process for the diffusion-brazing of superalloy parts according to Claim 1, **characterized in that**, after step (e), a first brazing operation is carried out, comprising the following steps:
- (f1) a filler metal, in the form of a conventional nickel-based or cobalt-based braze and fluxing element, is deposited on the surfaces to be brazed; and
- (f2) a brazing thermal cycle is carried out in a furnace with the temperature rising up to the brazing temperature in 15 minutes, until the filler metal has melted and the surfaces have been wetted.

3. Process for the diffusion-brazing of superalloy parts according to Claim 1, **characterized in that** in step (f) the one-component powder is deposited with an addition of organic binder.

4. Process for the diffusion-brazing of superalloy parts according to Claim 1, **characterized in that** in step (f) the filler material consists of a compact element obtained after the one-component powder obtained in step (c) has been placed in a mould of shape homothetic to the shape of the compact element to be obtained, and a thermal cycle is carried out for compacting the self-brazeable compact element by sintering it.

5. Process for the diffusion-brazing of superalloy parts according to Claim 1, **characterized in that** in step (f) the filler material is deposited plumb with the gap separating the bonding faces of the two parts (1, 2), which are joined together after completion of the next steps (g) and (h).

6. Process for the diffusion-brazing of superalloy parts according to Claim 1, **characterized in that** in step (f) the filler material is deposited plumb with a crack in the part (12) to be repaired, the repair being effected upon completion of the next steps (g) and (h).

7. Process for the diffusion-brazing of a superalloy part according to Claim 1, **characterized in that** in step (f) the filler material is deposited on a surface of the part to be refaced by the refacing being effected upon completion of the next steps (g) and (h) so as to restore the dimensions of the part.

## Patentansprüche

1. Verfahren zum Diffusionshartlöten von Werkstücken aus Superlegierung A unter Verwendung eines Füllwerkstoffs, der aus einem Lötpulver gewonnen wird, welches die folgenden Verfahrensschritte umfasst:
(a) Herstellung einer bestimmten Menge eines Superlegierungspulvers A von gleicher Zusammensetzung wie die Werkstücke und einer in Masseanteilen von 0,1 % bis 40 % entsprechenden Menge Pulver, das ausschließlich aus Schmelzmittelelementen aus der Gruppe Bor und/oder Silizium gebildet ist;
(b) Einführen der in Verfahrensschritt a hergestellten Pulver in gemischter Form mit Kugeln in einen Behälter, wobei Kugeln und Behälter aus Superlegierung A bestehen, sodann nach Schließen des Behälters Halten unter gesteuerter Atmosphäre;
(c) Einbringen des Behälters in eine Mühle und In-Bewegung-Halten des Behälters während eines Zeitraums von 30 Sekunden bis 500 Stunden, so dass das Schmelzmittelelement auf der Oberfläche der Körner des Superlegierungspulvers verkrustet;
(d) chemische Reinigung der zu lötenden Werkstück-Flächen im Bad;
(e) thermochemische Behandlung dieser Werkstücke im Ofen;
(f) Aufbringen eines Füllwerkstoffs, der von dem sogenannten Einkomponenten-Pulver gebildet wird, das in Verfahrensschritt (c) gewonnen wurde, auf den genannten Oberflächen von Werkstücken, wobei dieses Pulver von Superlegierungskörnern gebildet wird, auf deren Oberfläche Schmelzmittelelemente verkrustet sind;
(g) Durchführen eines Warmlötzyklus im Ofen, der ein stufenweise erfolgendes Ansteigen bis auf eine Löttemperatur von 1050 °C bis 1400 °C, die in Abhängigkeit von der Superlegierung bestimmt wird, und sodann einen Zeitraum des Temperaturhaltens von 15 bis 30 Minuten beinhaltet;
(h) Thermodiffusionsbehandlung im Ofen in gesteuerter Atmosphäre während einer Zeitdauer von 4 bis 16 Stunden.

2. Verfahren zum Diffusionshartlöten von Werkstücken aus Superlegierung nach Anspruch 1,
**dadurch gekennzeichnet,**
**dass** nach dem Verfahrensschritt (e) ein erster Lötvorgang durchgeführt wird, der folgende Schritte umfasst:
(f1) Aufbringen eines Lötmetalls in Form eines klassischen Lötmittels auf Nickel- oder Kobaltbasis und Schmelzmittelelements;
(f2) Durchführen eines Warmlötzyklus im Ofen, mit Temperaturanstieg auf die Löttemperatur in 15 Minuten, bis zum Schmelzen des Lötmittels und Netzen der Flächen.

3. Verfahren zum Diffusionshartlöten von Werkstücken aus Superlegierung nach Anspruch 1,
**dadurch gekennzeichnet,**
**dass** in Verfahrensschritt (f) das Einkomponenten-Pulver mit einem organischen Bindemittel-Zusatz aufgebracht wird.

4. Verfahren zum Diffusionshartlöten von Werkstücken aus Superlegierung nach Anspruch 1,
**dadurch gekennzeichnet,**
**dass** in Verfahrensschritt (f) der Füllwerkstoff aus einem kompakten Element besteht, das nach Einbringen des in Verfahrensschritt (c) erzielten Einkomponenten-Pulvers in eine Gießform mit einer zur Form des zu erzielenden kompakten Elements homothetischen Form und Durchführen eines Warmlötzyklus, der eine Verdichtung durch Sintern des selbstlötenden kompakten Elements gewährleistet, erzielt wird.

5. Verfahren zum Diffusionshartlöten von Werkstücken aus Superlegierung nach Anspruch 1,
**dadurch gekennzeichnet,**
**dass** in Verfahrensschritt (f) der Füllwerkstoff senkrecht zu dem Spiel zwischen den Verbindungsflächen der beiden Werkstücke (1, 2), deren Verbindung mit den nächsten Verfahrensschritten (g) und (h) hergestellt wird, aufgebracht wird.

6. Verfahren zum Diffusionshartlöten von Werkstücken aus Superlegierung nach Anspruch 1,
**dadurch gekennzeichnet,**
**dass** in Verfahrensschritt (f) der Füllwerkstoff senkrecht zu einem Riss in dem zu reparierenden Werkstück (12) aufgebracht wird, wobei die Reparatur mit den nächsten Verfahrensschritten (g) und (h) durchgeführt wird.

7. Verfahren zum Diffusionshartlöten von Werkstücken aus Superlegierung nach Anspruch 1,
**dadurch gekennzeichnet,**
**dass** in Verfahrensschritt (f) der Füllwerkstoff auf eine aufzufüllende Werkstückfläche aufgebracht wird, wobei das Auffüllen mit den nächsten Verfahrensschritten (g) und (h) dergestalt durchgeführt wird, dass die Wiederherstellung der Abmessungen des Werkstücks gewährleistet ist.
